# EUROPEAN PATENT SPECIFICATION

(11) **EP 3 697 047 B1**
(45) Date of publication and mention of the grant of the patent: **07.09.2022**
(21) Application number: 18875697.7
(22) Date of filing: 02.11.2018
(51) Int. Cl.: H04L 12/46, H04L 12/40, H04L 45/302, H04L 47/24, H04L 47/20, H04L 47/76, H04L 41/0893

(54) **RULE PROCESSING METHOD AND DEVICE**
REGELVERARBEITUNGSVERFAHREN UND - VORRICHTUNG
PROCÉDÉ ET DISPOSITIF DE TRAITEMENT DE RÈGLE

(30) Priority: 07.11.2017 CN 201711087176
(43) Date of publication of application: 19.08.2020
(73) Proprietor: Huawei Technologies Co., Ltd., Longgang District Shenzhen, Guangdong 518129 (CN)
(72) Inventor: NIE, Shengxian, Shenzhen Guangdong 518129 (CN); ZHOU, Runze, Shenzhen Guangdong 518129 (CN); CHEN, Zhongping, Shenzhen Guangdong 518129 (CN)
(74) Representative: Thun, Clemens
(86) International application number: PCT/CN2018/113795
(87) International publication number: WO 2019/091345

(56) References cited:
- CN-A- 101 478 743
- CN-A- 104 468 393
- US-A1- 2011 201 303
- 3gpp: "3rd Generation Partnership Project; Technical Specification Group Core Network and Terminals; Interface between the Control Plane and the User Plane of EPC Nodes; Stage 3 (Release 14)", 3GPP TS 29. 244 V0.3.0, 30 November 2016 (2016-11-30), pages 1-47, XP055531045, Retrieved from the Internet: URL:https://portal.3gpp.org/desktopmodules /Specifications/SpecificationDetails.aspx? specificationId=3111 [retrieved on 2018-12-06]
- ANONYMOUS: "3rd Generation Partnership Project; Technical Specification Group Core Network and Terminals; Interface between the Control Plane and the User Plane of EPC Nodes; Stage 3 (Release 14)", 3GPP STANDARD ; TECHNICAL SPECIFICATION ; 3GPP TS 29.244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V1.1.0, 20 April 2017 (2017-04-20), pages 1-123, XP051298202,
- Anonymous: "3rd Generation Partnership Project; Technical Specification Group Core Network and Terminals; Interface between the Control Plane and the User Plane of EPC Nodes; Stage 3 (Release 14)", 3GPP Standard ; Technical Specification ; 3GPP TS 29.244, no. V1.1.0, 20 April 2017 (2017-04-20), pages 1-123, XP051298202,
- Anonymous: "3rd Generation Partnership Project; Technical Specification Group Services and System Aspects; System Architecture for the 5G System; Stage 2 (Release 15)", 3GPP Standard ; Technical Specification ; 3GPP TS 23.501, no. V0.4.0, 20 April 2017 (2017-04-20), pages 1-124, XP051298169,

## Description

### TECHNICAL FIELD

This application relates to the field of communications technologies, and in particular, to a rule processing method and an apparatus.

### BACKGROUND

A configuration manner of a policy and charging control (policy and charging control, PCC) rule is preconfiguring a predefined rule in a session management function (session management function, SMF) node and a user plane function (user plane function, UPF) node.

Currently, a method for processing a predefined rule is as follows: In a session management procedure, a control plane function (control plane function, CPF) node adds predefined rule index information to a session management request message sent to a UPF node, and then the UPF node activates, based on the predefined rule index information, the predefined rule preconfigured in the UPF node. In a process of activating the predefined rule, the SMF associates the predefined rule with a quality-of-service flow QoS flow, and the UPF node creates a data transmission path for the predefined rule and allocates a resource, for example, a QoS resource, a bandwidth resource, or a bearer resource, that is required by the predefined rule.

Further, when a data packet received by the UPF node matches the activated predefined rule, the UPF node may complete data transmission according to a requirement of the predefined rule by using the pre-allocated resource. However, a large quantity of predefined rules may exist in the UPF node, and many services related to the predefined rules are not performed frequently. If a service related to a predefined rule is not performed at all or continues only for a short time after a resource is allocated to the predefined rule, the resource allocated to the predefined rule is not used for a long time, resulting in a resource waste problem.

Further, the document 3GPP TS 29.244 V0.3.0, November 2016 refers to the interface betweent the control plane and the user plane of EPC.

Further, document 3GPP TS 29.244 V1.1.0, April 2017 refers to the interface betweent the control plane and the user plane of EPC.

### SUMMARY

Embodiments of this application provide a rule processing method and an apparatus, to resolve a resource waste problem. The above mentioned problem is solved by the subject matter of the independent claims. Further implementation forms are provided in the dependent claims.

Compared with the prior art in which a predefined rule is associated with a QoS flow after the predefined rule is activated, to create a data transmission path, resulting in resource waste, according to this application, the first predefined rule is associated with no QoS flow in a process of activating the first predefined rule. Only after receiving a downlink data packet, the UPF node triggers a procedure of performing rule updating on the first predefined rule that matches the downlink data packet, and associating the first predefined rule with the QoS flow. In other words, a resource is allocated to the predefined rule only when the predefined rule needs to be used for data transmission. This avoids resource waste caused by allocating a resource to an unused predefined rule.

### BRIEF DESCRIPTION OF DRAWINGS

FIG. 1a is a schematic diagram of a possible network architecture according to an embodiment of this application;
FIG. 1b is a schematic diagram of another possible network architecture according to an embodiment of this application;
FIG. 1c is a schematic diagram of another possible network architecture according to an embodiment of this application;
FIG. 2 is a schematic structural diagram of a rule according to an embodiment of this application;
FIG. 3 is a flowchart of a rule processing method according to an embodiment of this application;
FIG. 4 is a schematic structural diagram of a first update rule according to an embodiment of this application;
FIG. 5 is a schematic structural diagram of a second update rule according to an embodiment of this application;
FIG. 6 is a schematic structural diagram of another second update rule according to an embodiment of this application;
FIG. 7 is a schematic structural diagram of another rule according to an embodiment of this application;
FIG. 8 is a schematic structural diagram of a third update rule according to an embodiment of this application;
FIG. 9 is a flowchart of another rule processing method according to an embodiment of this application;
FIG. 10 is a flowchart of another rule processing method according to an embodiment of this application;
FIG. 11 is a flowchart of another rule processing method according to an embodiment of this application;
FIG. 12 is a schematic structural diagram of a rule processing apparatus according to an embodiment of this application;
FIG. 13 is a schematic structural diagram of a user plane function node according to an embodiment of this application;
FIG. 14 is a schematic structural diagram of another rule processing apparatus according to an embodiment of this application; and
FIG. 15 is a schematic structural diagram of a session management function node according to an embodiment of this application.

### DESCRIPTION OF EMBODIMENTS

The following further describes in detail this application with reference to accompanying drawings. Specific operation methods in method embodiments can also be applied to an apparatus embodiment or a system embodiment. In the description of this application, unless otherwise stated, "a plurality of" means two or more.

System architectures and service scenarios described in this application are intended to more clearly describe the technical solutions in this application, and do not constitute any limitation on the technical solutions provided in this application. A person of ordinary skill in the art may know that as system architectures evolve and new service scenarios emerge, the technical solutions provided in this application are applicable to similar technical problems. To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

A possible network architecture in this application includes the following:

An access and mobility management function node: This node is a node responsible for mobility management, and may be configured to implement functions of user access control and mobility management, for example, functions such as lawful interception and access authorization.

A control plane management function node, configured to control a corresponding user plane management function node.

A user plane management function node: This node is an egress of user plane data, and is configured to: connect to an external network, transmit data, perform matching on a received data packet, and implement functions such as event reporting, rule update, and data forwarding.

A data network (data network, DN): This network is a network configured to provide external data and is, for example, an Internet network, and may send downlink data to a terminal or receive uplink data sent by a terminal.

A radio access network (radio access network, RAN) node: A RAN may be a RAN using different access technologies. Currently, there are two types of radio access technologies: a 3rd Generation Partnership Project (3rd Generation Partnership Project, 3GPP) access technology (for example, a radio access technology used in a 3G, 4G, or 5G system) and a non-3rd Generation Partnership Project (non 3rd generation partnership project, non-3GPP) access technology. The 3GPP access technology is an access technology that complies with a 3GPP standard specification. An access network using the 3GPP access technology is referred to as a radio access network (RAN). An access network device in a 5G system is referred to as a next-generation NodeB (next generation node base station, gNB). The non-3GPP access technology is an access technology that does not comply with the 3GPP standard specification, and is, for example, an air interface technology represented by a WiFi AP.

A terminal: The terminal is also referred to as user equipment (user equipment, UE). The terminal in this application is a device with a wireless transceiver function, and may be deployed on land, including an indoor or outdoor, handheld, or in-vehicle terminal, or may be deployed on water (such as ships) or in the air (such as on airplanes, balloons, and satellites). The terminal may include various types of mobile phones (mobile phone), tablet computers (Pad), computers with wireless transceiver functions, wireless data cards, virtual reality (virtual reality, VR) terminal devices, augmented reality (augmented reality, AR) terminal devices, machine type communication (machine type communication, MTC) terminal devices, terminal devices in industrial control (industrial control), terminal devices in self driving (self driving), terminal devices in remote medical care (remote medical), terminal devices in a smart grid (smart grid), terminal devices in transportation safety (transportation safety), terminal devices in a smart city (smart city), smart home appliances (home devices having a wireless communication function, for example, a refrigerator, a television, a washing machine, or furniture), and wearable devices (for example, a smart watch, a smart band, or a pedometer). The terminal in this application may be further disposed at a fixed location, and has a wireless communication function similar to that of the foregoing terminal device. In systems using different radio access technologies, names of terminals having similar wireless communication functions may be different. For ease of description, in the embodiments of this application, the foregoing apparatuses having wireless transceiver communication functions are collectively referred to as terminals.

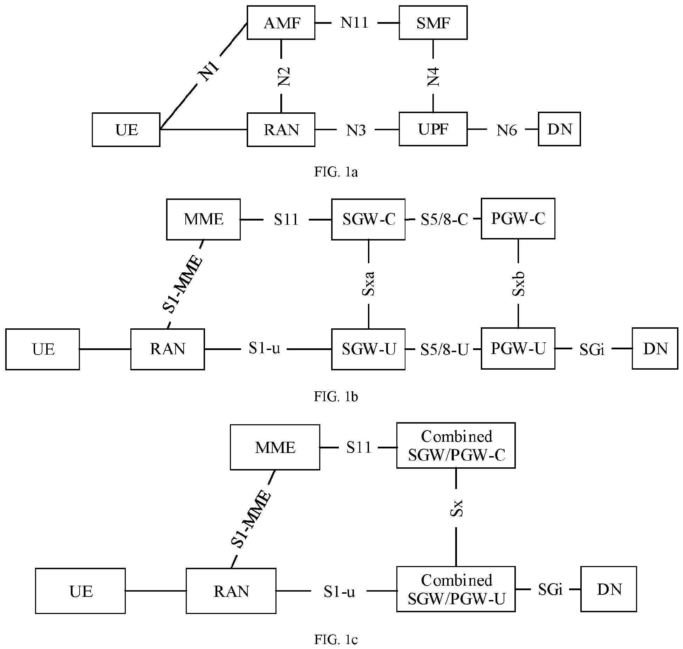

Embodiments of this application can be applied to a next-generation wireless communications system. For example, the network architecture is shown in FIG. 1a in a 5G network. An access and mobility management function node is an access and mobility management function (access and mobility management function, AMF) node, a session management function node is an SMF node, and a user plane function node is a UPF node.

The embodiments of this application may be alternatively applied to a 4G network in which a control plane function and a user plane function are separated. The network architecture is shown in FIG. 1b in the 4G network. An access and mobility management function node may be a mobility management entity (mobility management entity, MME), and corresponds to the AMF in the network architecture of the 5G network. The MME includes some session management functions. A control plane function node may be a packet data network gateway control plane PGW-C (PDN gateway control plane), a user plane function node may be a packet data network gateway user plane PGW-U (PDN gateway user plane), and a session management function node may control a corresponding user plane function node.

Alternatively, the network architecture is shown in FIG. 1c in the 4G network. The access and mobility management function node may be a mobility management entity (mobility management entity, MME), and corresponds to the AMF in the network architecture in the 5G network. The MME includes some session management functions. The control plane function node is a combined serving gateway (serving gateway, SGW)/packet data network gateway control plane PGW-C, and corresponds to the SMF in 5G. The control plane function node may control a corresponding user plane function node, and the user plane function node is a PGW-U.

First, related terms in the embodiments of this application are described.

### (1) A predefined rule, a first-level rule, and a second-level rule

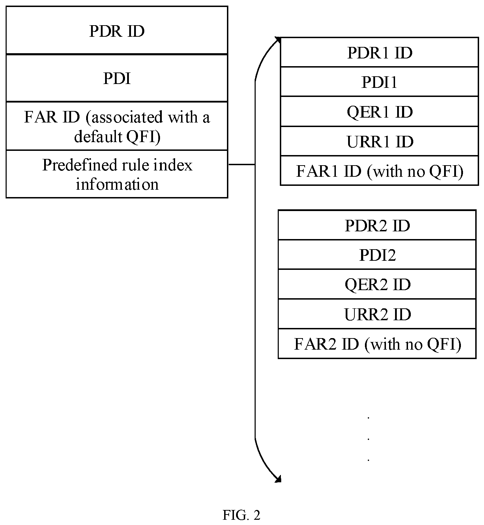

A set of rules may include only the first-level rule, or may include the first-level rule and the second-level rule. FIG. 2 shows a case in which a set of rules includes the first-level rule and the second-level rule. For example, the first-level rule is a packet detection rule (packet detection rule, PDR), and includes a packet detection rule (packet detection rule, PDR), packet detection information (packet detection information, PDI), and predefined rule index information, and optionally, may further include a forwarding action rule (forwarding action rule, FAR), a quality of service enforcement rule identifier (QoS enforcement rule identity, QER ID), and a usage reporting rule (usage reporting rule, URR).

The PDR may include information such as session information, an Internet Protocol (internet protocol, IP) address, and a data packet type.

The packet detection information of the rule serves to compare with information carried in a data packet and/or information associated with a data packet. When the data packet meets all content of the packet detection information of the rule, it is considered that the data packet matches a corresponding data packet detection rule. The packet detection information may be one or more pieces of information obtained based on a data packet. For example, the packet detection information may include one or more of an IP address (UE IP for short below) of a terminal, an application identifier (application identity, APP ID), a service data flow filter (service data flow filter, SDF filter), tunnel information (for example, a bearer identifier or a tunnel endpoint identifier), and a data flow identifier (for example, a service data flow identifier). In addition, the packet detection information may further include the information associated with the data packet, and the information associated with the data packet may be interface information, for example, a source interface (source interface) or a network instance (network instance).

The FAR is a rule used to describe a data forwarding action, and is associated with a data packet detection rule by using an identifier FAR ID. The data packet detection rule may be associated with a specific FAR according to the FAR ID. Specifically, the FAR may be associated with a default quality of service flow identifier (quality of service flow identity, QFI).

The URR is a rule used to describe a reporting action of the UPF, and is associated with a data packet detection rule by using an identifier URR ID. Therefore, the data packet detection rule may be associated with specific URR information based on the URR ID. Specifically, the URR may be associated with one or more reporting trigger points (trigger). For example, when a specific condition is met or an event occurs, the UPF sends information to the SMF.

A QER is a rule for describing quality of service for data transmission, and is associated with a data packet detection rule by using an identifier QER ID. Therefore, the data packet detection rule may be associated with specific QER information, that is, QoS information, based on the QER ID. Specifically, the QER may be associated with one or more QoS parameters, such as a bit rate, a flow label, a data packet rate, a priority, and association information. In 5G, a QoS flow is always associated with a QFI, and transmission quality of all data belonging to the QoS flow is ensured based on a parameter in the associated QER.

The predefined rule index information may be a predefined rule identifier or a predefined rule group identifier, and the second-level rule (the second-level rule is a predefined rule) may be indexed by using the predefined rule index information. If the predefined rule index information is a predefined rule identifier, the second-level rule includes a predefined rule corresponding to the predefined rule identifier. If the predefined rule index information is a predefined rule group identifier, the second-level rule includes all of a group of predefined rules corresponding to the predefined rule group identifier. If the predefined rule index information is a predefined rule group identifier or a PDR ID, a predefined rule may include any one or more of a PDR ID (which may be marked as a predefined PDR ID, Pre-PDR ID), PDI, a QER ID, a URR ID, and a FAR ID. The FAR ID of the predefined rule is associated with no QFI before the predefined rule is activated. The QER ID, the URR ID, and the FAR ID are respectively used as association information of QER information, URR information, and FAR information, and complete information of a corresponding rule may be obtained by using a rule identifier. Therefore, it may be considered that a predefined rule may include any one or more of the PDR ID, the PDI, the QER information, the URR information, and the FAR information, and the FAR information of the predefined rule does not include the QFI before the predefined rule is activated.

For example, FIG. 2 shows two predefined rules included in a group of predefined rules. A first predefined rule includes a PDR 1, PDI 1, a QER 1, a URR 1, and a FAR 1, and a second predefined rule includes a PDR 2, PDI 2, a QER 2, a URR 2, and a FAR 2. The QER information in the two predefined rules may be the same or different.

Optionally, if a data packet matches a predefined rule after the UPF receives the data packet, the UPF node performs an operation based on content indicated by the predefined rule. For example, a URR of the predefined rule matching the data packet includes: sending rule update indication information to the SMF node if the first-level rule is associated with no QFI. In this case, when determining that the first-level rule is associated with no QFI, the UPF node sends the rule update indication information based on the URR. It should be noted that if the data packet matches a predefined rule, when the first-level rule does not conflict with the predefined rule, the UPF node may directly execute the second-level rule, and when the first-level rule conflicts with the predefined rule, the UPF node preferentially executes the first predefined rule. The conflict here refers to that the first-level rule and the second-level rule process the same data packet differently and cannot be executed at the same time. An example is as follows:

The first-level rule requires that actions A, B, and C are performed on the data packet. Specifically, B includes an action a. The second-level rule requires that actions B and C are performed on the data packet. Specifically, B includes an action b. a and b are actions that cannot be performed at the same time or conditions that cannot be met at the same time. For example, a and b are two different bit rates, and a data packet can be forwarded based on only one bit rate.

### (2) The first predefined rule

The first predefined rule is a predefined rule that matches the first data packet received by the UPF node.

The UPF node may obtain, according to the first data packet, information used for packet detection, such as session information, an IP address, an application identifier, a data packet type, and a QFI. A PDR corresponding to a pre-PDR ID of the first predefined rule includes packet detection information, such as one or more of session information, an IP address, and a data packet type. A PDR of the first-level rule to which the first predefined rule belongs includes first-level packet detection information, for example, one or more of session information, an IP address, and a data packet type. After receiving the first data packet, the UPF first performs matching between the first data packet and the first-level rule. If information consistent with the first-level packet detection information of the first-level rule can be obtained based on the first data packet, for example, session information, an IP address, and a data packet type of the first data packet are consistent with the session information, the IP address, and the data packet type of the PDR of the first-level rule, the first data packet successfully matches the first-level rule. Further, if the second-level rule includes the packet detection information, a same method is used to match the second-level rule indexed by using the first-level rule. If the second-level rule does not include the packet detection information, for example, the predefined rule index information is one or more of rule identifiers such as a FAR ID, a URR ID, and a QER ID, and the data packet successfully matches the first-level rule, the predefined rule associated with the predefined rule index information is referred to as the first predefined rule. If the second-level rule includes the packet detection information, matching is performed between the first data packet and the second-level rule after matching is performed between the first data packet and the first-level rule, and the second-level rule that successfully matches the first data packet is referred to as the first predefined rule.

### (3) The second predefined rule

When the predefined rule index information is a predefined rule group identifier, referring to FIG. 2, if predefined rules in FIG. 2 have same QER IDs and may be actually a plurality of predefined rules with a same QER ID in a group of predefined rules, the first predefined rule is one of the predefined rules, and the second predefined rule is any one or more predefined rules other than the first predefined rule in the group of predefined rules shown in FIG. 2.

The following describes in detail the technical solutions provided in this application. In the following embodiments, an example in which the user plane function node is a UPF node and the session management function node is an SMF node is used for description. In actual implementation, the UPF node may be replaced by another node that has a same function as the user plane function node, and the SMF node may be replaced by another node that has a same function as the session management function node. For example, the UPF node may be replaced with a combined SGW/PGW-U or a PGW-U, and the SMF node may be replaced with a combined SGW/PGW-C or a PGW-C.

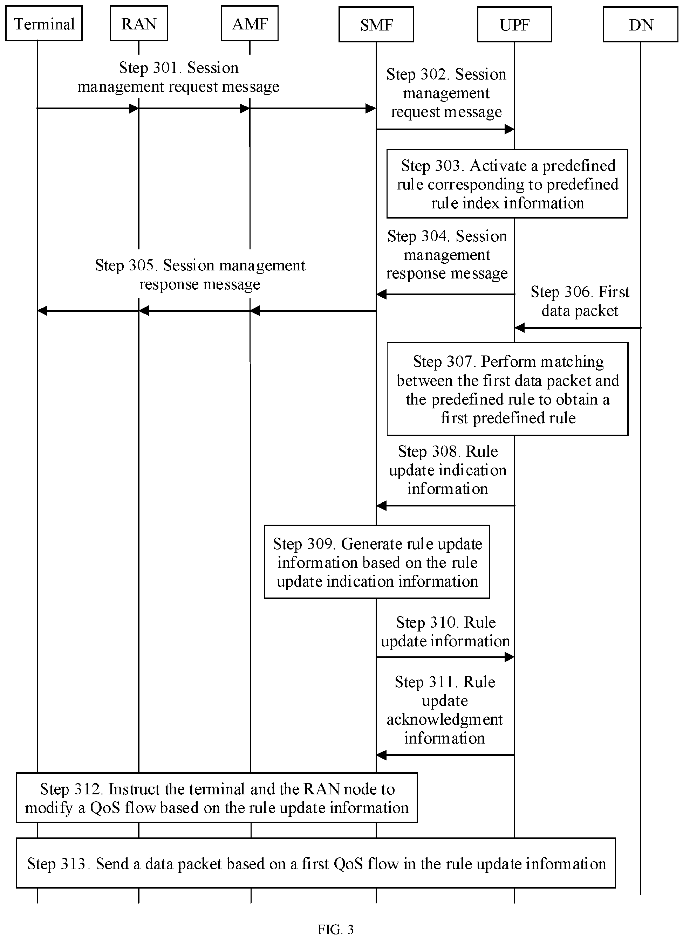

Based on the network architecture in FIG. 1 and the rule structure in FIG. 2, an embodiment of this application provides a rule processing method. The method can be applied to session management, for example, a session creation or session modification procedure. As shown in FIG. 3, the method includes the following steps.

Step 301: A terminal sends a session management request message to an SMF node by using a RAN node and an AMF node, correspondingly, the RAN node and the AMF node forward the session management request message, and the SMF node receives the session management request message.

Step 302: The SMF node sends the session management request message to a UPF node, where the session management request message includes predefined rule index information, and correspondingly, the UPF node receives the session management request message.

The predefined rule index information may be a predefined rule identifier or a predefined rule group identifier. The predefined rule identifier is used to identify a predefined rule. For example, a pre-PDR1, a PDR ID, a URR ID, QER ID, or a FAR ID may all indicate the first predefined rule. The predefined rule group identifier is used to identify a group of predefined rules. For example, if a predefined rule group name (group name) is N1, the predefined rule identifier is used to identify a group of predefined rules whose group name is N1. Any one of the group of predefined rules may be referred to as a rule corresponding to the predefined rule identifier.

Optionally, the session management request message may further include indication information for creating a packet detection rule, and the predefined rule index information carried in the session management request message is associated with the packet detection rule.

Step 303: The UPF node activates a predefined rule corresponding to the predefined rule index information.

The UPF node may activate a predefined rule corresponding to a predefined rule index identifier, or may activate a group of predefined rules corresponding to a predefined rule index group identifier at the same time.

Activating the predefined rule means: after receiving the predefined rule index information, the UPF node associates the predefined rule corresponding to the predefined rule index information with an existing packet detection rule, or creates a packet detection rule associated with the predefined rule index information, and after the predefined rule corresponding to the predefined rule index information is associated with the packet detection rule corresponding to the predefined rule index information, the predefined rule corresponding to the predefined rule index information is activated.

Step 304: The UPF node sends a session management response message to the SMF node. Correspondingly, the SMF node receives the session management response message.

Optionally, if the UPF node receives information in the session management request message, the session management response message sent to the SMF node may carry success indication information, for example, carry a cause value. The success indication information is used to indicate that the UPF node has received the session management request message, and may be further used to indicate that the UPF node has created or updated, based on the session management request message, a packet detection rule corresponding to the predefined index information, and has activated the predefined rule corresponding to the predefined rule index information. Optionally, the session management response message may further carry an identifier of the created or updated packet detection rule corresponding to the predefined rule index information.

Step 305: The SMF node sends the session management response message to the terminal by using the AMF node and the RAN node. Correspondingly, the AMF node and the RAN node send the session management response message, and the terminal receives the session management response message.

The session management procedure in step 301 to step 305 is a session creation or session modification procedure. After session creation or session modification is completed, subsequent steps may continue to be performed when downlink data sent by a DN or uplink data sent by the terminal is subsequently received.

Step 306: The DN sends a first data packet to the UPF node. Correspondingly, the UPF node receives the first data packet.

Optionally, the first data packet may alternatively be a packet sent by the terminal to the UPF node by using the RAN node.

Step 307: The UPF node performs matching between the first data packet and a rule in the UPF node to obtain a first predefined rule.

After receiving the first data packet, the UPF node may compare information carried in the first data packet and/or information associated with the first data packet with packet detection information of a rule (which may be an activated predefined rule, or may be another rule stored in the UPF node) in the UPF node. If the information carried in the first data packet and/or the information associated with the first data packet is consistent with the packet detection information of a rule A in the UPF node, the first data packet matches the rule A.

Specifically, the rule A may be an activated predefined rule, or may be another rule in the UPF node. If the rule A is an activated predefined rule, it may be determined that the rule A is the first predefined rule.

A process in which the UPF node matches the first data packet with the first predefined rule is: first, comparing whether the information in the first data packet is consistent with the packet detection information of the first-level rule; if yes, further comparing whether the packet detection information of the second-level rule associated with the first-level rule is consistent with the information in the first data packet; and if yes, determining that the first data packet matches the first predefined rule. For a specific matching method, refer to the foregoing description of the first predefined rule. Details are not described herein again.

Step 308: The UPF node sends rule update indication information to the SMF node, where the rule update indication information includes information about the first predefined rule. Correspondingly, the SMF node receives the rule update indication information.

The rule update indication information may be carried in a report message sent by the UPF node to the SMF node.

The information about the first predefined rule may have the following four composition manners:
Composition manner 1: The information about the first predefined rule includes PDI of the first predefined rule, and may specifically include one or more pieces of information of the PDI, for example, include an APP ID, or the information about the first predefined rule includes information in the first data packet, for example, includes an APP ID in the first data packet.
Composition manner 2: The information about the first predefined rule includes PDI (which may be specifically an APP ID) and a QER ID of the first predefined rule.

Corresponding to composition manner 1 and composition manner 2, the SMF node and the UPF node store a same first predefined rule, so that the SMF node finds, from predefined rules stored in the SMF node, the first predefined rule corresponding to the received information about the first predefined rule, to ensure that QoS information obtained by the SMF node is consistent with QoS information corresponding to the first predefined rule in the UPF node.

Composition manner 3: The information about the first predefined rule includes PDI (which may be specifically an APP ID) and predefined rule index information of the first predefined rule, or the information about the first predefined rule includes predefined rule index information and information in the first data packet, for example, an APP ID.

Composition manner 4: The information about the first predefined rule includes PDI (which may be specifically an APP ID), a QER ID, and predefined rule index information of the first predefined rule.

Corresponding to composition manner 3 and composition manner 4, the SMF node does not directly store the first predefined rule, but the SMF may obtain, based on the received PDI or information (for example, an APP ID) in the first data packet, QoS information corresponding to the QER ID of the first predefined rule. For example, the SMF stores QoS information corresponding to predefined rule index information of each predefined rule and/or QoS information corresponding to an OER ID, and a correspondence between the QoS information and PDI.

It should be noted that if finding no QoS flow that meets the first predefined rule, the UPF node is triggered to send the rule update indication information to the SMF node. That the UPF node finds no QoS flow that meets the first predefined rule includes the following four cases:
Case 1: The first data packet matches the first predefined rule, but the first-level rule to which the first predefined rule belongs is associated with no QFI.
Case 2: The first data packet matches the first predefined rule, but a QoS flow associated with the first-level rule to which the first predefined rule belongs does not meet QoS required by a QER ID of the first predefined rule.
Case 3: The first data packet matches the first predefined rule, and the first data packet is a packet that is received by the UPF node for the first time and that matches the first predefined rule.
Case 4: The first data packet does not match the first predefined rule, that is, no predefined rule in the UPF node matches the first data packet.

Step 309: The SMF node generates rule update information based on the rule update indication information.

Corresponding to the four composition manners of the information about the first predefined rule, the SMF node generates the rule update information by using the following four methods:
Method 1: Corresponding to composition manner 1, the information about the first predefined rule includes the PDI of the first predefined rule or the APP ID in the first data packet.

The SMF node searches for the first predefined rule that is stored in the SMF node and that includes the PDI or the APP ID, to determine QoS information (for example, the QoS information is QoS1) corresponding to a QER ID of the first predefined rule. Then, the SMF node creates a first QoS flow that meets QoS1, to obtain an identifier of the first QoS flow. Alternatively, the SMF node searches context for the first QoS flow that meets QoS 1, to obtain the identifier of the first QoS flow, and then generates a first update rule based on the identifier of the first QoS flow.

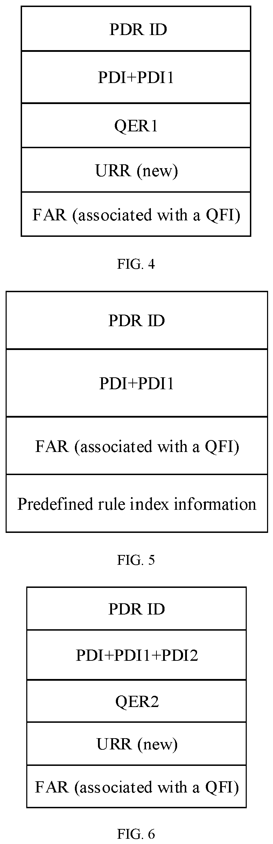

For example, the first predefined rule is the first predefined rule in the group of predefined rules in FIG. 2. As shown in FIG. 4, the first update rule includes a PDR ID, PDI1, a QER1, a URR, and a FAR. The PDI1 and the QER1 of the first update rule may be respectively the same as the PDI1 and the QER1 of the first predefined rule, the URR1 of the first update rule is not completely the same as the URR1 of the first predefined rule, and the URR1 of the first update rule does not include the reporting trigger conditions described in case 1 to case 4. In addition, the FAR of the first update rule is associated with the QFI of the first QoS flow found or created by the SMF node, and the PDI1 of the first update rule is the same as the PDI included in the information about the first predefined rule.

It can be understood that if the SMF creates a new first QoS flow that meets QoS 1, the first update rule is a new rule generated by the SMF node, instead of a rule obtained by modifying the first rule. Alternatively, if finding, from context, the first QoS flow that meets the QoS1, the SMF node may obtain the first update rule by updating an existing rule. For example, the SMF node updates, to a first QoS flow identifier, a QFI associated with the FAR of the first-level rule to which the first predefined rule belongs. In addition, the first update rule is a "semi-dynamic" rule. The "semi-dynamic" means that a new rule is not a rule that is dynamically delivered, and instead is a rule created or updated under a triggering condition after the UPF receives a data packet.

Method 2: Corresponding to composition manner 2, the information about the first predefined rule includes the PDI and the QER ID of the first predefined rule.

In addition to obtaining, in manner 1, the QoS corresponding to the first predefined rule, the SMF node may further determine the first predefined rule only based on the QER ID to determine QoS information (for example, the QoS information may be QoS2) corresponding to the QER ID, search existing context for a first QoS flow satisfying QoS2, or create a first QoS flow satisfying QoS2, and generate the first update rule based on the first QoS flow identifier. It can be understood that the PDI1 of the first update rule is the same as the PDI included in the information about the first predefined rule, and the QER1 of the first update rule is a QER corresponding to the QER ID of the information about the first predefined rule.

The SMF node may generate the first update rule based on the found first predefined rule stored in the SMF node. For a method for generating the first update rule by the SMF node based on the first predefined rule and the identifier of the found or created first QoS flow, refer to the description in method 1. Details are not described herein again.

Method 3: Corresponding to composition manner 3, the information about the first predefined rule includes the PDI and the predefined rule index information of the first predefined rule.

Because the SMF node stores the correspondence between PDI and QoS information, the SMF node may find QoS information (for example, the QoS information may be QoS3) corresponding to the PDI, and then the SMF node creates a first QoS flow that meets QoS1, to obtain an identifier of the first QoS flow. Alternatively, the SMF node searches context for the first QoS flow that meets the QoS 1, to obtain the identifier of the first QoS flow, and then generates a second update rule based on the identifier of the first QoS flow.

For example, the first predefined rule is the first predefined rule in the group of predefined rules in FIG. 2. As shown in FIG. 5, the second update rule includes the first-level rule and the second-level rule. The first-level rule includes PDI1, a FAR, and predefined rule index information, and the FAR is associated with the identifier of the first QoS flow found or created by the SMF node. The second-level rule includes a predefined rule indexed by using the predefined rule index information, that is, the second-level rule includes all of the group of predefined rules shown in FIG. 2. The second update rule may be associated, by using index information, with the first predefined rule or a group of predefined rules corresponding to the first predefined rule. The second update rule herein is a rule different from the activated predefined rule. It can be understood that the PDI1 included in the first-level rule is the same as the PDI included in the information about the first predefined rule, and the predefined rule index information included in the first-level rule is the predefined rule index information included in the information about the first predefined rule.

Method 4: Corresponding to composition manner 4, the information about the first predefined rule includes the PDI, the QER ID, and the predefined rule index information of the first predefined rule.

The SMF node may determine QoS information (for example, the QoS information may be QoS4) corresponding to the QER ID of the first predefined rule, search existing context for a first QoS flow that meets QoS4, and if finding the first QoS flow that meets QoS4, generate the second update rule by using the found first QoS flow; or if finding no first QoS flow that meets QoS4, create the first QoS flow that meets QoS4 and generate the second update rule by using the created first QoS flow.

For a method for generating, by the SMF node, the second update rule based on the found or created first QoS flow, refer to the description in the method 3. Details are not described herein again.

Step 310: The SMF node sends the rule update information to the UPF node. Correspondingly, the UPF node receives the rule update information.

The rule update information may be carried in a session management request message sent by the SMF node to the UPF node.

If the SMF node creates a new QoS flow, the rule update information is used to indicate the new created rule. If the SMF node finds an existing QoS flow, the rule update information is used to indicate an updated rule, and the rule update information may carry only information that is different from the original rule.

For example, if QER IDs of the first predefined rule and the second predefined rule are the same, after the first data packet matches the first predefined rule, the UPF node has received the second update rule sent by the SMF node. After the second data packet matches the second predefined rule, the UPF node may send the rule update indication information to the SMF node. Because the SMF node has found or created, in a process of generating the rule update information for the first predefined rule, a QoS flow that meets QoS corresponding to the QER ID, the SMF node may find an existing QoS flow. In this case, the session management request message sent by the SMF node to the UPF node may include only the packet detection information of the first predefined rule. The UPF node may find the second update rule based on the packet detection information of the first predefined rule, and further add the packet detection information of the second predefined rule to the second update rule.

Step 311: The UPF node sends rule update acknowledgment information to the SMF node. Correspondingly, the SMF node receives the rule update acknowledgment information.

The rule update acknowledgment information may be carried in a session management response message sent by the UPF node to the SMF node, and the rule update acknowledgment information is used to notify the SMF node that the rule update information has been received.

Step 312: The UPF node instructs, by using the SMF node and the AMF node, the terminal and the RAN node to modify the QoS flow according to the rule update information.

It should be noted that a sequence between step 312 and steps 310 and 311 is not limited in this embodiment of this application. Optionally, step 312 may be performed before step 310. After generating the rule update information based on the rule update indication sent by the UPF node, the SMF node first notifies the terminal and the RAN node. After the terminal and the RAN node complete update based on the rule update information, step 310 starts to be performed.

Optionally, in another possible implementation, step 312 is performed after step 310 and step 311. To be specific, after determining that the UPF node has updated the rule based on the rule update information, the SMF node instructs the terminal and the RAN node to complete end-to-end update based on the rule update information.

Optionally, step 312 may be alternatively performed synchronously with step 310, or may be performed at any moment in the process of performing step 310 and step 311.

Step 312 may be implemented by using a session management procedure, and may be specifically implemented by using a session creation or session modification/update procedure. The SMF node may send a session management message to the RAN node by using the AMF node. The session management message carries information related to the rule update information, and the information related to the rule update information is, for example, one or more of an identifier of a data packet detection rule that needs to be created or updated, packet detection information that needs to be updated or created, a quality of service enforcement rule, and a forwarding action rule.

Step 312 may be implemented by sending a signaling message, or may be implemented by sending a data packet.

In a scenario of implementation by sending a signaling message, the SMF node sends related information of the rule update information to the AMF node. The related information of the rule update information may include any one or more pieces of information of an updated rule. For example, the related information of the rule update information is the identifier of the first QoS flow. Then, the AMF node sends a session request message to the RAN node, where the session request message carries the identifier of the first QoS flow, the RAN node may allocate a resource to the first QoS flow, and then the RAN node sends an access-side resource modification message to the terminal, to request the terminal to allocate a corresponding resource to the first QoS flow. After completing resource allocation, the terminal may send a session response message to the RAN node, and then the RAN node sends the session response message to the AMF node. Then, the AMF node sends a session update context message to the SMF node, to maintain information synchronization between the terminal, the RAN node, and the SMF node. By using this procedure, the terminal and the RAN node can update the QoS flow information, so that end-to-end data transmission can be implemented.

In a scenario of implementation by sending a data packet, if the SMF node finds the first QoS flow in the context in a process of generating the rule update information, and the first QoS flow uses reflective QoS (reflective QoS), the UPF node sends the data packet to the RAN node. The data packet carries an identifier of the first QoS flow and a reflective QoS indicator (reflective QoS indicator, RQI). After receiving the data packet, the RAN node may send the identifier of the first QoS flow and the RQI to the terminal, so that the terminal and the RAN node derive a QoS rule and complete resource allocation related to the first QoS flow. The identifier of the first QoS flow may be carried in a subsequent packet transmission procedure.

Step 313: The UPF node sends a data packet based on the first QoS flow of the rule update information.

The UPF node may send, based on the first QoS flow of the rule update information, a data packet that matches the rule update information. The data packet may be the first data packet, or may be another data packet that matches the rule update information.

According to the rule processing method provided in the embodiments of this application, compared with the prior art in which a predefined rule is associated with a QoS flow after the predefined rule is activated, to create a data transmission path, resulting in resource waste, in the embodiments of this application, the first predefined rule is associated with no QoS flow in a process of activating the first predefined rule. Only after receiving a downlink data packet, the UPF node triggers a procedure of performing rule updating on the first predefined rule that matches the downlink data packet, and associating the first predefined rule with the QoS flow. In other words, a resource is allocated to the predefined rule only when the predefined rule needs to be used for data transmission. This avoids resource waste caused by allocating a resource to an unused predefined rule.

In a possible scenario, the predefined index information is a predefined rule group identifier, and QER IDs of all of the group of predefined rules corresponding to the predefined rule group identifier are the same. If the first predefined rule in the embodiment corresponding to FIG. 3 belongs to the group of predefined rules, the UPF node receives a second data packet, and the second data packet matches the second predefined rule in the group of predefined rules. In this case, the SMF node may still be requested to update the rule according to the procedure corresponding to FIG. 3. If information about the second predefined rule received by the SMF node is the same as the information about the first predefined rule in composition manner 3 or composition manner 4 in step 308, as shown in FIG. 6, the SMF node may add information included in the PDI of the second predefined rule to the second update rule generated in method 3 or method 4, that is, update the PDI1 to PDI1+PDI2. For example, if the PDI of the second predefined rule includes the APP2 ID, the PDI of the second update rule is updated from UE IP+APP1 ID to UE IP+(APP1 ID, APP2 ID), and the second update rule to which the information included in the PDI of the second predefined rule is added is sent to the UPF node. Optionally, the SMF node may further send indication information to the UPF node, to instruct the UPF node to update the PDI of the second update rule from UE IP+APP1 ID to UE IP+(APP1 ID, APP2 ID).

It can be understood that because the QER IDs of the first predefined rule and the second predefined rule are the same, QoS required by the first predefined rule is the same as QoS required by the second predefined rule. Therefore, the SMF node may find or create a same QoS flow in a process of generating the rule update information for the first predefined rule and a process of generating the rule update information for the second predefined rule. That is, the second update rule generated for the first predefined rule has been associated with the QoS flow, no new rule needs to be generated for the second predefined rule, and only the PDI of the second predefined rule needs to be added to the second update rule. On the basis that the second update rule has been generated for one predefined rule in the group of predefined rules, a process of updating another predefined rule in the group of predefined rules can be simplified, thereby improving rule update efficiency and reducing network overheads.

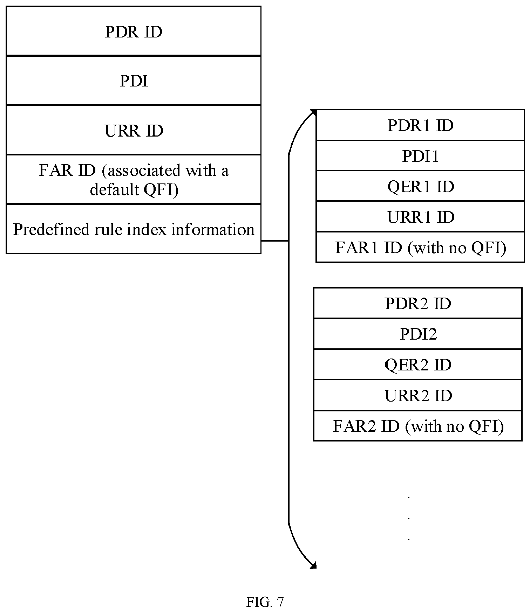

In another possible scenario, the predefined index information is a predefined rule group identifier, QER IDs of all of the group of predefined rules corresponding to the predefined rule group identifier are the same, and the first-level rule to which the predefined rule index information belongs includes a PDR ID, PDI, a URR ID, a FAR ID, and the predefined rule index information, as shown in FIG. 7.

In this scenario, if the first data packet matches any predefined rule (for example, the first predefined rule) corresponding to the predefined rule index information, and the first-level rule in the first predefined rule is associated with no QFI, or a QoS flow corresponding to the QFI associated with the first-level rule in the first predefined rule does not meet QoS required by the QER ID in the first predefined rule, or the first data packet is a packet that is received by the UPF node for the first time and that matches the first predefined rule, the SMF node sends rule update indication information to the UPF node. The rule update indication information is used to instruct the UPF node to generate rule update information for a group of predefined rules corresponding to predefined index information. The rule update indication information may include the PDI and the predefined rule index information of the first predefined rule, or include the PDI, the QER ID, and the predefined rule index information of the first predefined rule.

If the rule update indication information may include the PDI and the predefined rule index information of the first predefined rule, the SMF node may find QoS corresponding to the PDI, and then search existing context for a QoS flow satisfying the QoS. If no QoS flow satisfying the QoS exists, the SMF node creates a QoS flow satisfying the QoS.

If the rule update indication information includes the PDI, the QER ID, and the predefined rule index information of the first predefined rule, the SMF node may determine QoS corresponding to the QER ID of the first predefined rule, and then search existing context for a QoS flow satisfying the QoS. If no QoS flow satisfying the QoS exists, the SMF node creates a QoS flow satisfying the QoS.

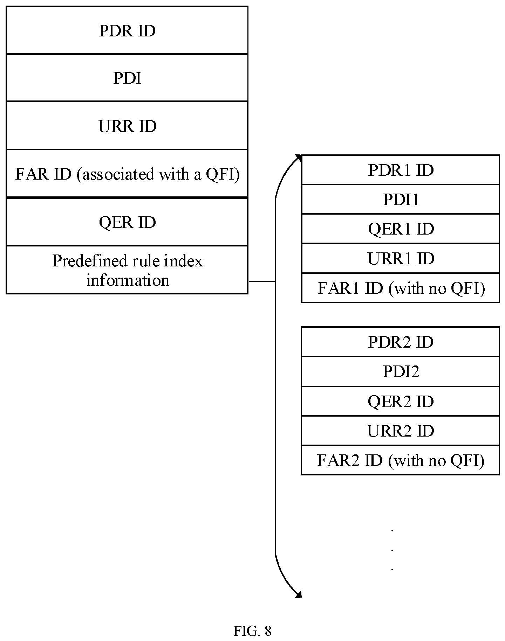

Because the QER IDs of all of the group of predefined rules corresponding to the predefined rule index information are the same, a QoS flow found or created according to the information about the first predefined rule meets QoS required by any predefined rule corresponding to the predefined rule index information. Therefore, the SMF node may generate a new rule for the group of predefined rules corresponding to the predefined rule index information, and the generated new rule includes the first-level rule and the second-level rule, as shown in FIG. 8. The first-level rule includes content in the first-level rule to which the predefined rule index information belongs, and further includes the QER ID of the first predefined rule, where the FAR ID of the first-level rule is associated with a QFI of a QoS flow found or created by the SMF node. The second-level rule includes the group of predefined rules corresponding to the predefined rule index information.

Optionally, the PDI of the first-level rule may further include PDI of each of the group of predefined rules corresponding to the predefined rule index information.

According to the method, when QER IDs of the group of predefined rules corresponding to the predefined rule index information are the same, the SMF node may generate the third update rule for the group of predefined rules, and does not need to separately update each of the group of predefined rules. Only one rule updating process needs to be performed for the group of predefined rules, thereby reducing network overheads and improving rule update efficiency and data packet processing efficiency.

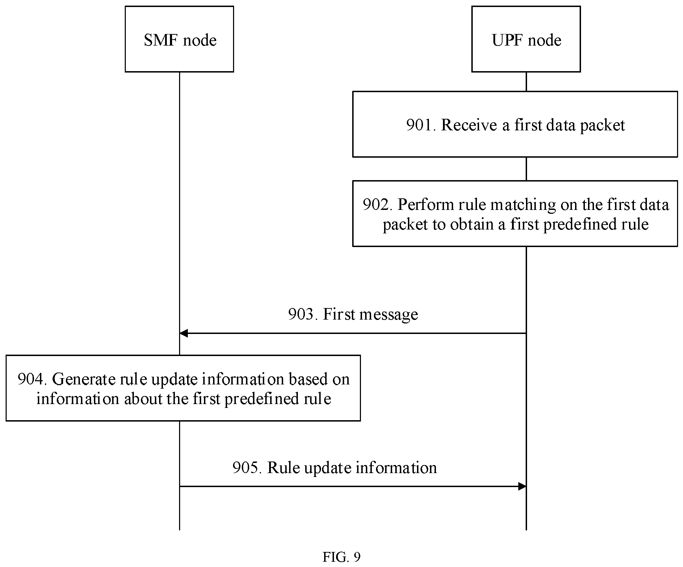

Based on the embodiment in FIG. 3, an embodiment of this application further provides a rule processing method. In this embodiment, an example in which a user plane function node is a UPF node and a session management function node is an SMF node is used for description. As shown in FIG. 9, the method includes the following steps.

Step 901: A UPF node receives a first data packet.

The first data packet is a data packet sent by a DN to the UPF node.

Step 902: Perform rule matching on the first data packet to obtain a first predefined rule.

A method for performing rule matching on the first data packet is: performing matching between the first data packet and a predefined rule stored in the UPF node, where the first predefined rule is a predefined rule that matches the first data packet.

The first predefined rule includes any one or more of a data packet detection rule, packet detection information, a quality of service enforcement rule, and a usage reporting rule.

Step 903: If no quality of service flow meets the first predefined rule, the UPF node sends a first message to an SMF node. Correspondingly, the SMF node receives the first message.

The quality of service flow may be a QoS flow.

The first message includes information about the first predefined rule. The information about the first predefined rule includes the packet detection information of the first predefined rule, or includes the packet detection information and a quality of service enforcement rule identifier of the first predefined rule, or includes predefined rule index information and the packet detection information in the first predefined rule, or includes predefined rule index information and the packet detection information and a quality of service enforcement rule identifier in the first predefined rule. For example, the first predefined rule includes the four composition manners listed in step 308.

The packet detection information may be PDI, the quality of service enforcement rule identifier may be a QER ID, and the predefined rule index information may be a predefined rule identifier or a predefined rule group identifier.

In step 903, that no QoS flow meets the first predefined rule specifically includes:
no QoS flow is associated with the first predefined rule; or
a QoS flow is associated with the first predefined rule, but the QoS flow associated with the first predefined rule does not meet the quality of service QoS information of the first predefined rule.

That no QoS flow is associated with the first predefined rule means: a FAR ID of a first-level rule to which the first predefined rule belongs is associated with no QFI. This corresponds to case 1 in step 308.

That a QoS flow is associated with the first predefined rule, but the QoS flow associated with the first predefined rule does not meet the quality-of-service QoS information required by the first predefined rule means: the FAR ID of the first-level rule to which the first predefined rule belongs is associated with a QFI, but a QoS flow corresponding to the QFI does not meet QoS information corresponding to the QER ID of the first predefined rule. This corresponds to case 2 in step 308.

Optionally, that no QoS flow meets the first predefined rule may alternatively be:
the first data packet matches the first predefined rule, and the first data packet is a packet that is received by the UPF node for the first time and that matches the first predefined rule. This corresponds to case 3 in step 308.

Alternatively, the first data packet does not match the first predefined rule, that is, no predefined rule in the UPF node matches the first data packet. This corresponds to case 4 in step 308.

Step 904: The SMF node generates rule update information based on the information about the first predefined rule.

The rule update information includes an identifier of a first QoS flow, and the first QoS flow meets the first predefined rule. Specifically, the first QoS flow meets QoS information of the first predefined rule.

For a method for generating, by the SMF node, the rule update information based on the information about the first predefined rule, refer to related descriptions in step 309.

Step 905: The SMF node sends the rule update information to the UPF node. Correspondingly, the UPF node receives the rule update information.

For details, refer to related descriptions in step 310. Details are not described herein again.

It can be understood that after receiving the rule update information, the UPF node may instruct a terminal and a RAN node to change the QoS flow to the first QoS flow of the rule update information, to implement end-to-end data transmission.

According to the rule processing method provided in the embodiments of this application, compared with the prior art in which a predefined rule is associated with a QoS flow after the predefined rule is activated, to create a data transmission path, resulting in resource waste, in the embodiments of this application, the first predefined rule is associated with no QoS flow in a process of activating the first predefined rule. Only after receiving a downlink data packet, the UPF node triggers a procedure of performing rule updating on the first predefined rule that matches the downlink data packet, and associating the first predefined rule with the QoS flow. In other words, a resource is allocated to the predefined rule only when the predefined rule needs to be used for data transmission. This avoids resource waste caused by allocating a resource to an unused predefined rule.

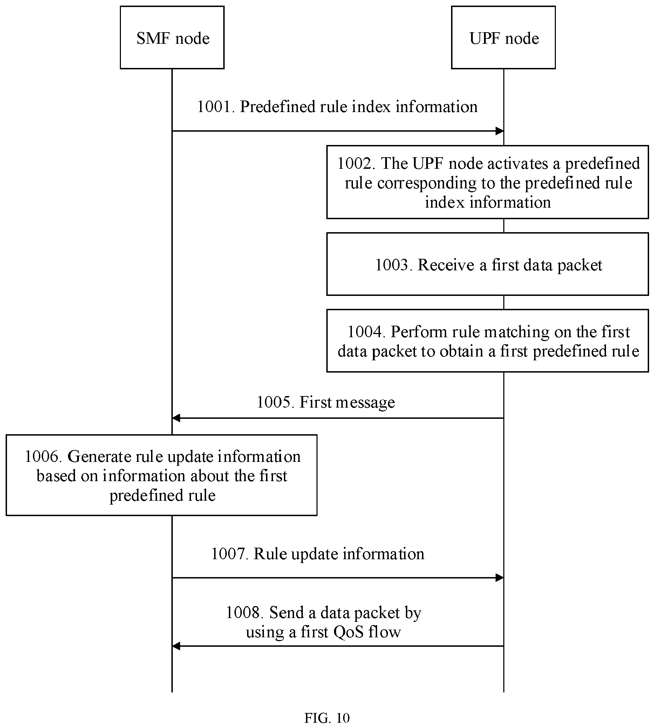

In a possible implementation provided in an embodiment of this application, before the procedure in the embodiment in FIG. 9, the predefined rule may be first activated. As shown in FIG. 10, the method includes the following steps.

Step 1001: An SMF node sends predefined rule index information to a UPF node. Correspondingly, the UPF node receives the predefined rule index information.

The predefined rule index information may be a predefined rule identifier or a predefined rule group identifier.

Step 1002: The UPF node activates a predefined rule corresponding to the predefined rule index information.

The UPF node may search for a predefined rule corresponding to the predefined index information, and then activate the predefined rule. The activated predefined rule includes a first predefined rule.

Optionally, the UPF node may activate a predefined rule corresponding to a predefined rule index identifier, or may activate a group of predefined rules corresponding to a predefined rule index group identifier at the same time.

For a specific method for activating the predefined rule by the UPF node, refer to related descriptions in step 303. Details are not described herein again.

For step 1003 to step 1007, refer to descriptions in step 901 to step 905. Certainly, this application is not limited thereto.

Step 1008: The UPF node sends a data packet by using a first QoS flow.

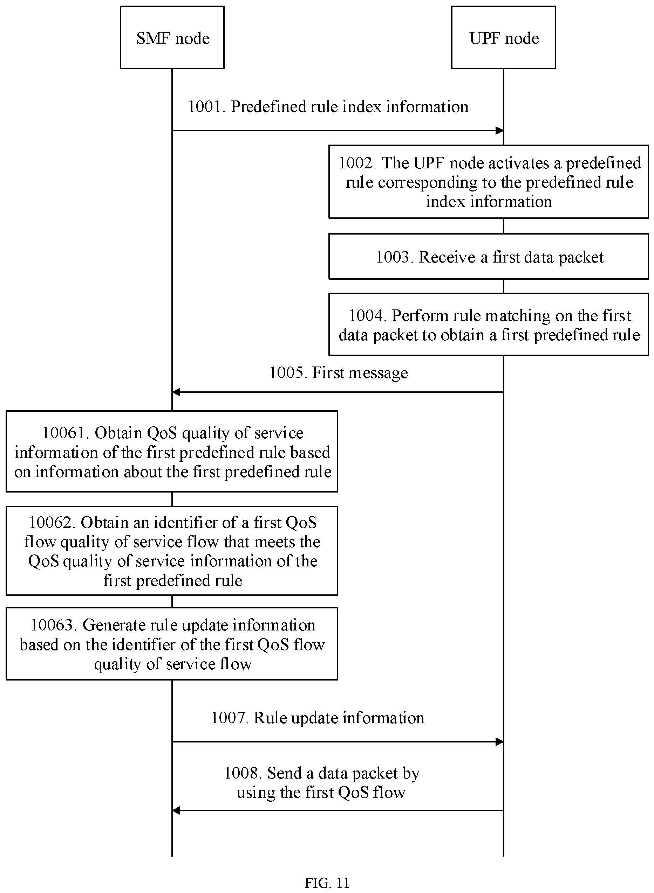

Optionally, as shown in FIG. 11, step 1006 in which the SMF node generates the rule update information based on the information about the first predefined rule may be specifically implemented as follows:
Step 10061: The SMF node obtains quality of service information of the first predefined rule based on the information about the first predefined rule.

The quality of service information of the first predefined rule is QoS information of the first predefined rule.

In a first possible implementation of this step, when the information about the first predefined rule includes packet detection information of the first predefined rule, the SMF node searches for the first predefined rule including the packet detection information of the information about the first predefined rule, to obtain the QoS information of the first predefined rule.

It can be understood that the SMF node and the UPF node store a same group of predefined rules. Therefore, the SMF node may find the first predefined rule based on the packet detection information, and further obtain QoS information corresponding to a QER ID of the first predefined rule.

In a second possible implementation of this step, when the information about the first predefined rule includes a quality of service enforcement rule identifier of the first predefined rule, the SMF node obtains the quality of service information that is of the first predefined rule and that is corresponding to the quality of service enforcement rule identifier of the first predefined rule.

Because the SMF node stores QoS information corresponding to each QER ID, after receiving the QER ID included in the information about the first predefined rule, the SMF node may search for the QoS information corresponding to the QER ID.

Step 10062: The SMF node obtains an identifier of a first quality of service flow that meets the quality of service information of the first predefined rule.

A method for obtaining, by the SMF node, an identifier of a first quality of service flow that meets the quality of service information of the first predefined rule is as follows:
creating, by the session management function node, the first quality of service flow that meets the quality of service information of the first predefined rule, and obtaining the identifier of the first quality of service flow; or
searching, by the session management function node, context to obtain the identifier of the first quality of service flow that meets the quality of service information of the first predefined rule.

Optionally, the SMF node may search the context to obtain the identifier of the first QoS flow that meets the QoS information of the first predefined rule. If the identifier of the first QoS flow is not found, the SMF node may further create the first QoS flow that meets the QoS information of the first predefined rule, to obtain the identifier of the first QoS flow.

Alternatively, the SMF node may directly create the first QoS flow that meets the QoS information of the first predefined rule, to obtain the identifier of the first QoS flow.

Step 10063: The SMF node generates the rule update information based on the identifier of the first quality of service flow.

The rule update information includes a forwarding action rule and the packet detection information in the first predefined rule, and the forwarding action rule includes the identifier of the first quality of service flow.

Optionally, the rule update information may be a first update rule, a second update rule, or a third update rule.

Optionally, if the information about the first predefined rule includes the packet detection information in the first predefined rule (corresponding to composition manner 1), or if the information about the first predefined rule includes the packet detection information and a quality of service enforcement rule identifier in the first predefined rule (corresponding to composition manner 2), the rule update information is a first update rule. The first update rule includes a forwarding action rule, and the packet detection information and the quality of service enforcement rule in the first predefined rule, where, the forwarding action rule includes the identifier of the first quality of service flow.

Optionally, the first update rule further includes a usage reporting rule (for example, a URR). For example, a structure of the first update rule is shown in FIG. 4.

For a method for generating the first update rule by the SMF node, refer to method 1 and method 2 in step 309.

Optionally, if the information about the first predefined rule includes the packet detection information in the first predefined rule and the predefined rule index information (corresponding to composition manner 3), or if the information about the first predefined rule includes the packet detection information and a quality of service enforcement rule identifier in the first predefined rule, and the predefined rule index information (corresponding to composition manner 4), the rule update information is a second update rule. The second update rule includes a first-level rule and a second-level rule. The first-level rule in the second update rule includes: the predefined rule index information, and the packet detection information and the forwarding action rule in the first predefined rule. The forwarding action rule includes the identifier of the first QoS flow. The second-level rule in the second update rule includes a predefined rule indexed by using the predefined rule index information. For example, a structure of the second update rule is shown in FIG. 5.

For a method for generating the first update rule by the SMF node, refer to method 3 and method 4 in step 309.

In a possible implementation, if the predefined rule index information is a predefined rule group identifier, quality of service enforcement rules in the group of predefined rules corresponding to the predefined rule index information are the same. The second update rule further includes packet detection information in a second predefined rule, and the second predefined rule is any one or more of the group of predefined rules corresponding to the predefined rule index information.

The second predefined rule is an activated predefined rule that matches the data packet received by the UPF node, and the second predefined rule and the first predefined rule have a same quality of service enforcement rule.

For example, after the SMF node generates the second update rule for the first predefined rule, if the UPF node receives a second data packet and the second data packet matches the second predefined rule, because the second predefined rule and the first predefined rule belong to a same group of predefined rules, and QER IDs of the first predefined rule and the second predefined rule are the same, the SMF node also searches for or creates the first QoS flow in a process of generating the rule update information for the second predefined rule. Therefore, a new rule does not need to be generated for the second predefined rule, and only packet detection information of the second predefined rule needs to be added to the second update rule.

According to the method, the SMF node does not need to separately create a new rule for a group of predefined rules that have a same quality of service enforcement rule. On the basis that the second update rule has been created for the first predefined rule, if the second predefined rule that belongs to the same group as the first predefined rule and that has a same quality of service enforcement rule as the first predefined rule is received, only the packet detection information of the second predefined rule needs to be added to the second update rule. This accelerates rule update and therefore can improve data packet transmission efficiency.

Optionally, in another possible implementation of this embodiment of this application, the predefined rule index information is a predefined rule group identifier, and quality of service enforcement rules in the group of predefined rules corresponding to the predefined rule index information are the same.

If the information about the first predefined rule includes the packet detection information in the first predefined rule and the predefined rule index information, or if the information about the first predefined rule includes the packet detection information and a quality of service enforcement rule identifier in the first predefined rule, and the predefined rule index information, the rule update information is a third update rule. The third update rule includes a first-level rule and a second-level rule. The first-level rule in the third update rule is a first-level rule to which the predefined rule index information belongs. The second-level rule in the third update rule is the group of predefined rules corresponding to the predefined rule index information. A forwarding action rule in the first-level rule in the third update rule includes the identifier of the first QoS flow. For example, a structure of the third update rule is shown in FIG. 8.

Optionally, the first-level rule in the third update rule includes the quality of service enforcement rule in the first predefined rule.

Optionally, the third update rule further includes packet detection information in a third predefined rule, and the third predefined rule is any one or more of the group of predefined rules corresponding to the predefined rule index information.

The third predefined rule is an activated predefined rule, and the third predefined rule is one or more of the group of predefined rules to which the first predefined rule belongs. For example, the third predefined rule may include all predefined rules except the first predefined rule in the group of predefined rules to which the first predefined rule belongs.

According to the method, after receiving the first data packet that matches the first predefined rule, the UPF node only needs to send the first message to the SMF node once, and the SMF node may generate the third update rule for the group of predefined rules to which the first predefined rule belongs. The UPF node does not need to send the first message separately according to each of the group of predefined rules to which the first predefined rule belongs. In addition, the SMF node may associate the identifier of the first QoS flow with the group of predefined rules by using one rule updating process, and does not need to update a rule for one piece of predefined rule index information for a plurality of times. This can reduce network overheads, reduce rule update time, and improve data packet transmission efficiency.

The foregoing describes the solutions provided in the embodiments of the present invention mainly from a perspective of interaction between different network elements. It can be understood that, to implement the foregoing functions, the user plane function node and the session management function node include corresponding hardware structures and/or software modules for performing the functions. With reference to the units and algorithm steps described in the embodiments disclosed in this application, embodiments of this application can be implemented in a form of hardware or hardware and computer software. Whether a function is performed by hardware or hardware driven by computer software depends on particular applications and design constraints of the technical solutions. A person skilled in the field may use different methods to implement the described functions for each particular application, but it should not be considered that the implementation falls beyond the scope of the technical solutions in embodiments of the present invention.

In the embodiments of the present invention, functional unit division may be performed on the user plane function node, the session management function node, and the like based on the foregoing method examples. For example, functional units may be divided corresponding to the functions. Alternatively, two or more functions may be integrated into one processing unit. The integrated unit may be implemented in a form of hardware, or may be implemented in a form of a software functional unit. It should be noted that, in this embodiment of the present invention, unit division is an example, and is merely a logical function division. In actual implementation, another division manner may be used.

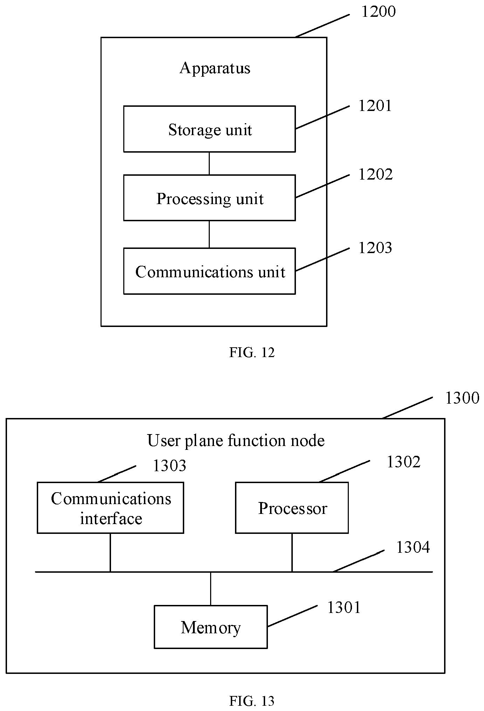

FIG. 12 is a schematic block diagram of a rule processing apparatus 1200 according to an embodiment of this application. The apparatus may exist in a form of software, or may be a user plane function node, or may be a chip in a user plane function node. For example, the apparatus may be a UPF node, or may be a chip in a UPF node. The apparatus 1200 includes: a processing unit 1202 and a communications unit 1203. The processing unit 1202 is configured to control and manage an action of the apparatus 1200. For example, the processing unit 1202 is configured to support the apparatus 1200 in performing step 303 and step 307 in FIG. 3, step 902 in FIG. 9, step 1003 and step 1004 in FIG. 10, step 1003 and step 1004 in FIG. 11, and/or another process of the technology described in this specification. The communications unit 1203 is configured to support communication between the apparatus 1200 and another network element (for example, an SMF node, a RAN node, or a DN). For example, the communications unit 1203 is configured to support the apparatus 1200 in performing step 304, step 308, and step 311 in FIG. 3, step 901 and step 903 in FIG. 9, step 1002 and step 1005 in FIG. 10, and step 1002 and step 1005 in FIG. 11. The apparatus 1200 may further include a storage unit 1201, configured to store program code and data of the apparatus 1200.

The processing unit 1202 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or any combination thereof. The processing unit 1202 may implement or execute various example logical blocks, modules, and circuits described with reference to content disclosed in the present invention. The processor may be a combination of processors implementing a computing function, for example, a combination of one or more microprocessors, or a combination of the DSP and a microprocessor. The communications unit 1203 may be a communications interface. The communications interface is a general term. In specific implementation, the communications interface may include a plurality of interfaces, for example, may include an interface between a user plane function node and an SMF node, an interface between a user plane function node and a RAN node, and/or another interface. The storage unit 1201 may be a memory.

When the processing unit 1202 is a processor, the communications unit 1203 is a communications interface, and the storage unit 1201 is a memory, a structure of the apparatus 1200 in this embodiment of this application may be a structure of a user plane function node shown in FIG. 13.

FIG. 13 is a possible schematic structural diagram of a user plane function node 1300 according to an embodiment of this application.

As shown in FIG. 13, the user plane function node 1300 includes a processor 1302, a communications interface 1303, and a bus 1304. Optionally, the user plane function node 1300 may further include a memory 1301. The communications interface 1303, the processor 1302, and the memory 1301 may be connected to each other by using the bus 1304. The bus 1304 may be a peripheral component interconnect (peripheral component interconnect, PCI for short) bus, an extended industry standard architecture (extended industry standard architecture, EISAfor short) bus, or the like. The bus 1304 may be classified into an address bus, a data bus, a control bus, and the like. For ease of representation, only one thick line is used to represent the bus in FIG. 13, but this does not mean that there is only one bus or only one type of bus.

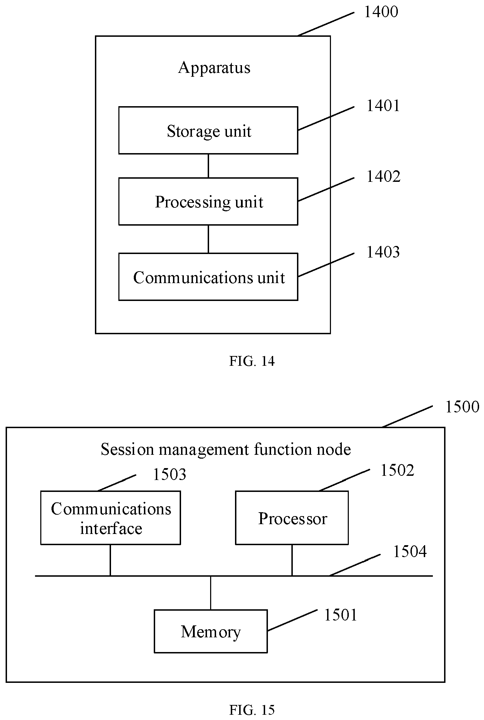

FIG. 14 is a schematic block diagram of another rule processing apparatus according to an embodiment of this application. The apparatus may exist in a form of software, or may be a user plane function node, or may be a chip in a user plane function node. For example, the apparatus may be an SMF node, or may be a chip in an SMF node. The apparatus 1400 includes: a processing unit 1402 and a communications unit 1403. The processing unit 1402 is configured to control and manage an action of the apparatus 1400. For example, the processing unit 1402 is configured to support the apparatus 1400 in performing step 309 in FIG. 3 and/or another process of the technology described in this specification. The communications unit 1403 is configured to support communication between the apparatus 1400 and another network element (for example, a UPF node and an AMF node). For example, the communications unit 1403 is configured to support the apparatus 1400 in performing step 302 and step 310 in FIG. 3, step 905 in FIG. 9, step 1001 and step 1007 in FIG. 10, and step 1001 and step 1007 in FIG. 11. Optionally, the apparatus 1400 may further include a storage unit 1401, configured to store program code and data of the apparatus 1400.

The processing unit 1402 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or any combination thereof. The processing unit 1402 may implement or execute various example logical blocks, modules, and circuits described with reference to content disclosed in the present invention. The processor may be a combination of processors implementing a computing function, for example, a combination of one or more microprocessors, or a combination of the DSP and a microprocessor. The communications unit 1403 may be a communications interface. The communications interface is a general term. In specific implementation, the communications interface may include a plurality of interfaces, for example, may include an interface between a session management function node and a user plane function node, an interface between a session management function node and an AMF node, and/or another interface. The storage unit 1401 may be a memory.

When the processing unit 1402 is a processor, the communications unit 1403 is a communications interface, and the storage unit 1401 is a memory, a structure of the apparatus 1400 in this embodiment of this application may be a structure of a session management function node shown in FIG. 15.

FIG. 15 is a possible schematic structural diagram of a session management function node according to an embodiment of this application.

As shown in FIG. 15, the session management function node 1500 includes: a processor 1502, a communications interface 1503, and a bus 1504. Optionally, the session management function node 1500 may further include a memory 1501. The communications interface 1503, the processor 1502, and the memory 1501 may be connected to each other by using the bus 1504. The bus 1504 may be a peripheral component interconnect (peripheral component interconnect, PCI for short) bus, an extended industry standard architecture (extended industry standard architecture, EISA for short) bus, or the like. The bus 1504 may be classified into an address bus, a data bus, a control bus, and the like. For ease of representation, only one thick line is used to represent the bus in FIG. 15, but this does not mean that there is only one bus or only one type of bus.

Method or algorithm steps described in combination with the content disclosed in this application may be implemented by using hardware, or may be implemented by a processor executing a software instruction. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may alternatively be a component of the processor. The processor and the storage medium may be located in an ASIC. In addition, the ASIC may be located in a core network interface device. Certainly, the processor and the storage medium may alternatively be located in the core network interface device as discrete assemblies.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical or other forms.

The units described as separate parts may or may not be physically separate, and parts displayed as units may or may not be physical units, may be located in one position, or may be distributed on a plurality of network devices. Some or all of the units may be selected depending on actual requirements to achieve the objectives of the solutions of the embodiments.

In addition, functional units in the embodiments of the present invention may be integrated into one processing unit, or each of the functional units may exist independently, or two or more units may be integrated into one unit. The integrated unit may be implemented in a form of hardware, or may be implemented in a form of hardware in addition to a software functional unit.

Based on the foregoing descriptions of the implementations, a person skilled in the art can clearly understand that this application may be implemented by software in addition to necessary universal hardware or by hardware only. In most circumstances, the former is a preferred implementation. Based on such an understanding, the technical solutions of this application essentially or the part contributing to the prior art may be implemented in a form of a software product. The computer software product is stored in a readable storage medium, such as a floppy disk, a hard disk, or an optical disc of a computer, and includes several instructions for instructing a computer device (which may be a personal computer, a server, a network device, or the like) to perform the methods described in the embodiments of this application.

The foregoing descriptions are merely specific implementations of this application, but are not intended to limit the protection scope of this application. Therefore, the protection scope of this application shall be subject to the protection scope of the claims.

## Claims

1. A rule processing method performed by a user plane function, UPF, the method comprising:
a.) receiving predefined rule index information from a session management function, SMF, the predefined rule index information being a predefined rule identifier (step 302);
b.) activating a first predefined rule corresponding to the predefined rule index information among a plurality of predefined rules stored on the UPF (step 303);
c.) receiving a first data packet from a data network, DN, the first data packet being intended for a terminal served by a random access network, RAN (step 306);
d.) only after the reception of the first data packet, performing rule matching on the first data packet to obtain a second predefined rule, the second predefined rule being one predefined rule among the plurality of predefined rules stored on the UPF (step 307);
e.) sending a first message to the SMF if no quality of service, QoS, flow meets the second predefined rule, wherein the first message comprises information about the second predefined rule (step 308); and
f.) after sending the first message to the SMF, receiving rule update information from the SMF, wherein the rule update information comprises an identifier of a first QoS flow, and the first QoS flow meets the second predefined rule (step 310);
g.) instructing, by using the SMF and a mobility management function, AMF, the terminal and the RAN to modify its QoS flow according to the first QoS flow (step 312);
h.) sending the first data packet based on the first QoS flow to the RAN (step 313).

2. The rule processing method according to claim 1, wherein the second predefined rule comprises QoS information, and that the first QoS flow meets the second predefined rule is: the first QoS flow meets the QoS information of the second predefined rule.

3. The rule processing method according to claim 2, wherein that the first QoS flow meets the second predefined rule is:
▪ the first QoS flow meets QoS information corresponding to a QoS enforcement rule identity, QER ID, of the second predefined rule; or
▪ the second predefined rule comprises QoS information, and that the first QoS flow meets the second predefined rule is: the first QoS flow may be used to transmit a data flow corresponding to the first data packet that matches the second predefined rule.

4. The rule processing method according to any one of claims 2 to 3, wherein that no QoS flow meets the second predefined rule comprises:
▪ no QoS flow is associated with the second predefined rule; or
▪ a QoS flow is associated with the second predefined rule, but the QoS flow associated with the second predefined rule does not meet the QoS information of the second predefined rule.

5. The rule processing method according to any one of claims 1 to 4, wherein the second predefined rule comprises any one or more of a data packet detection rule, packet detection information, a QoS enforcement rule, a usage reporting rule, and a forwarding action rule.

6. A user plane function, UPF, configured to perform any of the methods according to claims 1-5.

## Patentansprüche

1. Regelverarbeitungsverfahren, das durch eine Benutzerebenenfunktion, user plane function (UPF), durchgeführt wird, wobei das Verfahren umfasst:
a.) Empfangen vordefinierter Regelindexinformationen von einer Sitzungsverwaltungsfunktion, session management function (SMF), wobei die vordefinierten Regelindexinformationen eine vordefinierte Regelkennung sind (Schritt 302);
b.) Aktivieren einer ersten vordefinierten Regel, die den vordefinierten Regelindexinformationen entspricht, aus einer Vielzahl von vordefinierten Regeln, die in der UPF gespeichert sind (Schritt 303);
c.) Empfangen eines ersten Datenpakets von einem Datennetz, DN, wobei das erste Datenpaket für ein Endgerät bestimmt ist, das durch ein Funkzugangsnetz, radio access network (RAN), bedient wird (Schritt 306);
d.) erst nach dem Empfang des ersten Datenpakets Durchführen eines Regelabgleichs an dem ersten Datenpaket, um eine zweite vordefinierte Regel zu erhalten, wobei die zweite vordefinierte Regel eine vordefinierte Regel aus der Vielzahl von vordefinierten Regeln ist, die in der UPF gespeichert sind (Schritt 307);
e.) Senden einer ersten Nachricht an die SMF, wenn kein Dienstgüteablauf, QoS-Ablauf (QoS = quality of service), die zweite vordefinierte Regel erfüllt, wobei die erste Nachricht Informationen über die zweite vordefinierte Regel umfasst (Schritt 308); und
f.) nach dem Senden der ersten Nachricht an die SMF Empfangen von Regelaktualisierungsinformationen von der SMF, wobei die Regelaktualisierungsinformationen eine Kennung eines ersten QoS-Ablaufs umfassen und der erste QoS-Ablauf die zweite vordefinierte Regel erfüllt (Schritt 310);
g.) Anweisen, unter Verwendung der SMF und einer Mobilitätsverwaltungsfunktion, mobility management function (AMF), des Endgeräts und des RAN, seinen QoS-Ablauf gemäß dem ersten QoS-Ablauf zu modifizieren (Schritt 312);
**h.)** Senden des ersten Datenpakets an das RAN basierend auf dem ersten QoS-Ablauf (Schritt 313).

2. Regelverarbeitungsverfahren nach Anspruch 1, wobei die zweite vordefinierte Regel QoS-Informationen umfasst und dass der erste QoS-Ablauf die zweite vordefinierte Regel erfüllt, darin besteht: der erste QoS-Ablauf erfüllt die QoS-Informationen der zweiten vordefinierten Regel.

3. Regelverarbeitungsverfahren nach Anspruch 2, wobei, dass der erste QoS-Ablauf die zweite vordefinierte Regel erfüllt, darin besteht:
▪ der erste QoS-Ablauf erfüllt QoS-Informationen, die einer QoS-Durchsetzungsregelidentität, QoS enforcement rule identity (QER ID), der zweiten vordefinierten Regel entsprechen; oder
▪ die zweite vordefinierte Regel umfasst QoS-Informationen umfasst und dass der erste QoS-Ablauf die zweite vordefinierte Regel erfüllt, darin besteht: der erste QoS-Ablauf kann verwendet werden, um einen Datenfluss zu übertragen, der dem ersten Datenpaket entspricht, das mit der zweiten vordefinierten Regel übereinstimmt.

4. Regelverarbeitungsverfahren nach einem der Ansprüche 2 bis 3, wobei, dass kein QoS-Ablauf die zweite vordefinierte Regel erfüllt, Folgendes umfasst:
▪ der zweiten vordefinierten Regel ist kein QoS-Ablauf zugeordnet; oder
▪ ein QoS-Ablauf ist der zweiten vordefinierten Regel zugeordnet, aber der der zweiten vordefinierten Regel zugeordnete QoS-Ablauf erfüllt nicht die QoS-Informationen der zweiten vordefinierten Regel.

5. Regelverarbeitungsverfahren nach einem der Ansprüche 1 bis 4, wobei die zweite vordefinierte Regel ein eines oder mehreres aus einer Datenpaketerkennungsregel, Paketerkennungsinformationen, einer QoS-Durchsetzungsregel, einer Verwendungsberichtsregel und einer Weiterleitungsaktionsregel umfasst.

6. Benutzerebenenfunktion, UPF, die so konfiguriert ist, dass sie eines der Verfahren nach den Ansprüchen 1 bis 5 durchführt.

## Revendications

1. Procédé de traitement de règle exécuté par une fonction de plan utilisateur, UPF, le procédé comprenant :
a.) la réception d'informations d'index de règle prédéfinie provenant d'une fonction de gestion de session, SMF, les informations d'index de règle prédéfinie étant un identifiant de règle prédéfinie (étape 302) ;
b.) l'activation d'une première règle prédéfinie correspondant aux informations d'index de règle prédéfinie parmi une pluralité de règles prédéfinies stockées sur l'UPF (étape 303) ;
c.) la réception d'un premier paquet de données en provenance d'un réseau de données, DN, le premier paquet de données étant destiné à un terminal desservi par un réseau à accès aléatoire, RAN (étape 306) ;
d.) seulement après la réception du premier paquet de données, l'exécution d'une mise en correspondance de règles sur le premier paquet de données pour obtenir une seconde règle prédéfinie, la seconde règle prédéfinie étant une règle prédéfinie parmi la pluralité de règles prédéfinies stockées sur l'UPF (étape 307) ;
e.) l'envoi d'un premier message à la SMF si aucun flux de qualité de service, QoS, n'est conforme à la seconde règle prédéfinie, dans lequel le premier message comprend des informations sur la seconde règle prédéfinie (étape 308) ; et
f.) après l'envoi du premier message à la SMF, la réception d'informations de mise à jour de règle provenant de la SMF, dans lequel les informations de mise à jour de règle comprennent un identifiant d'un premier flux QoS, et le premier flux QoS est conforme à la seconde règle prédéfinie (étape 310) ;
g.) le fait d'ordonner, en utilisant la SMF et une fonction de gestion de la mobilité, AMF, au terminal et au RAN de modifier leur flux QoS selon le premier flux QoS (étape 312) ;
h.) l'envoi du premier paquet de données sur la base du premier flux QoS au RAN (étape 313).

2. Procédé de traitement de règle selon la revendication 1, dans lequel la seconde règle prédéfinie comprend des informations QoS, et le fait que le premier flux QoS est conforme à la seconde règle prédéfinie est : le premier flux QoS est conforme aux informations QoS de la seconde règle prédéfinie.

3. Procédé de traitement de règle selon la revendication 2, dans lequel le fait que le premier flux QoS est conforme à la seconde règle prédéfinie est :
▪ le premier flux QoS est conforme aux informations QoS correspondant à une identité de règle d'application QoS, QER ID, de la seconde règle prédéfinie ; ou
▪ la seconde règle prédéfinie comprend des informations QoS, et le fait que le premier flux QoS est conforme à la seconde règle prédéfinie est : le premier flux QoS peut être utilisé pour transmettre un flux de données correspondant au premier paquet de données qui correspond à la seconde règle prédéfinie.

4. Procédé de traitement de règle selon l'une quelconque des revendications 2 et 3, dans lequel le fait qu'aucun flux de QoS ne soit conforme à la seconde règle prédéfinie comprend :
▪ aucun flux QoS n'est associé à la seconde règle prédéfinie ; ou
▪ un flux QoS est associé à la seconde règle prédéfinie, mais le flux QoS associé à la seconde règle prédéfinie n'est pas conforme aux informations QoS de la seconde règle prédéfinie.

5. Procédé de traitement de règle selon l'une quelconque des revendications 1 à 4, dans lequel la seconde règle prédéfinie comprend un ou plusieurs éléments parmi une règle de détection de paquets de données, des informations de détection de paquets, une règle d'application QoS, une règle de rapport d'utilisation et une règle d'action de transfert.

6. Fonction de plan utilisateur, UPF, configurée pour exécuter l'un quelconque des procédés selon les revendications 1 à 5.
